# EUROPÄISCHE PATENTSCHRIFT

(11) **EP 2 709 874 B1**
(45) Veröffentlichungstag und Bekanntmachung des Hinweises auf die Patenterteilung: **13.01.2016**
(21) Anmeldenummer: 12727784.6
(22) Anmeldetag: 16.05.2012
(51) Int. Cl.: B60N 2/48

(54) **IN X-RICHTUNG VERSCHIEBLICHE KOPFSTÜTZE**
HEAD RESTRAINT WHICH IS MOVABLE IN THE X DIRECTION
APPUI-TÊTE COULISSANT DANS LA DIRECTION X

(30) Priorität: 20.05.2011 DE 102011102702
(43) Veröffentlichungstag der Anmeldung: 26.03.2014
(73) Patentinhaber: Johnson Controls GmbH, 51399 Burscheid (DE)
(72) Erfinder: FROTZ, Thomas, 51399 Burscheid (DE)
(74) Vertreter: Wolff, Felix
(86) Internationale Anmeldenummer: PCT/EP2012/002113
(87) Internationale Veröffentlichungsnummer: WO 2012/159720

(56) Entgegenhaltungen:
- DE-A1-102006 032 596
- DE-B3-102004 059 237
- DE-B3-102005 020 276

## Beschreibung

Die vorliegende Erfindung betrifft eine Kopfstütze mit einem Gehäuse, das zumindest teilweise relativ zu einer Haltestange, mit der die Kopfstütze an der Rückenlehne eines Fahrzeugsitzes angeordnet ist, zum Kopf des Sitzinsassen hin- und davon wegbewegbar ist, wobei an dem Gehäuse ein Läufer mit Form- und/oder Kraftschlussmitteln entlang dessen Längserstreckung vorgesehen ist, die wahlweise jeweils mit einem Sperrmittel in Eingriff bringbar sind und dadurch das Gehäuse in seiner jeweiligen Position wahlweise fixieren.

Die Erfindung betrifft insbesondere eine Kopfstütze nach dem Oberbegriff des Anspruchs 1. Eine derartige Kopfstütze ist aus der DE 10 2005 020276 B3 bekannt.

Des Weiteren betrifft die vorliegende Erfindung ein Verfahren zur Verstellung der vorgenannten Kopfstütze.

Derartige Kopfstützen sind aus dem Stand der Technik bekannt. Die Verstellung des Gehäuses der Kopfstütze in X-Richtung dient dabei insbesondere dazu, den Komfort des Sitzinsassen zu erhöhen, indem die Kopfstütze vom Kopf des Sitzinsassen hin- und davon wegbewegbar ist. Dabei ist es wichtig, dass sich die Kopfstütze nicht selbsttätig vom Kopf des Sitzinsassen wegbewegt, weil dadurch, beispielsweise bei einem Heckaufprall, Verletzungen am Kopf, Nacken und/oder Rücken des Sitzinsassen auftreten können. Für den Fachmann besteht ständig die Aufgabe, die vorhandenen Verstellmechanismen der Kopfstütze zu verbessern.

Es war deshalb die Aufgabe der vorliegenden Erfindung eine alternative, in X-Richtung verstellbare Kopfstütze zur Verfügung zu stellen, welche sich nicht selbsttätig vom Kopf des Sitzinsassen wegbewegt, insbesondere bei einem Heckaufprall.

Gelöst wird die Aufgabe mit einer Kopfstütze nach Anspruch 1.

Die vorliegende Erfindung betrifft eine Kopfstütze, die mit einer oder zwei Haltestangen an der Rückenlehne eines Kraftfahrzeugsitzes angeordnet ist. Diese Kopfstütze weist ein Gehäuse auf, das zumindest teilweise relativ zu der/den Haltestange(n) zum Kopf des Sitzinsassen hin- und davon weg-, d. h. entlang der X-Richtung entsprechend dem für den Fahrzeugbau festgelegten Koordinatensystem, bewegbar ist. An dem Gehäuse ist ein Läufer mit Form- und/oder Kraftschlussmitteln, beispielsweise Zähnen, vorgesehen, die parallel zu dessen Längsachse angeordnet sind. Diese Form- und/oder Kraftschlussmittel können mit einem Sperrmittel, das vorzugsweise fest mit der/den Haltestange(n) verbunden ist, in Eingriff gebracht werden, um das Gehäuse in der jeweils gewünschten Position zu fixieren. Vorzugsweise sind die Form- und/oder Kraftschlussmittel reihenförmig hintereinander, wie beispielsweise bei einer Zahnstange, angeordnet. Erfindungsgemäß ist nun an dem Gehäuse ein Lager für den Läufer angeordnet, wobei der Läufer relativ zu diesem Lager und damit relativ zu dem Gehäuse drehbar und/oder längsverschieblich vorgesehen ist. Dadurch können die Form- und/oder Kraftschlussmittel des Läufers außer Eingriff mit dem Sperrmittel gebracht werden. Sowohl die Drehung als auch die Längsverschiebung des Läufers sind aber vorzugsweise nur eingeschränkt möglich. Gemäß einem bevorzugten Gegenstand der vorliegenden Erfindung ist der Läufer eine Zahnstange, die auf zwei gegenüberliegenden Seiten jeweils Zähne aufweist, die jeweils hintereinander in einer Reihe angeordnet sind. Diese Zahnreihen können gleichzeitig, insbesondere durch eine Drehung mit dem Sperrmittel, in Eingriff gebracht oder davon gelöst werden.

Erfindungsgemäß weist das Lager einen oder mehrere Steuerstift(e) auf, der jeweils mit einer Steuerkurve des Läufers zusammenwirkt. Jeder Steuerstift ist ortsfest zu dem Lager des Läufers und/oder zu dem Gehäuse der Kopfstütze angeordnet. Durch eine Relativaxialbewegung zwischen Läufer und Lager, dreht sich, gemäß einer bevorzugten Ausführungsform, der Läufer relativ zu dem Lager. Die Steuerkurve ist als Steuerschlitz ausgeführt, in den der Steuerstift eingeführt wird. Dieser Steuerschlitz weist einen steilen, vorzugsweise helixförmigen Abschnitt auf. Der Steuerstift kann sich in diesem Abschnitt relativ zu dem Läufer bewegen. Dabei wird der Läufer vorzugsweise gedreht. Vorzugsweise weist die Steuerkurve darüber hinaus eine Quernut und/oder einen Rastabschnitt auf.

Vorzugsweise ist zwischen dem Läufer und dem Lager ein Federmittel vorgesehen, das den Läufer, insbesondere rotativ, relativ zu dem Sperrmittel antreibt.

Vorzugsweise ist zwischen dem Läufer und dem Gehäuse ein Axialspiel vorgesehen, so dass sich der Läufer relativ zu dem Gehäuse bewegen kann.

Ein weiterer Gegenstand der vorliegenden Erfindung ist das Verfahren nach Anspruch 5.

Die zu der erfindungsgemäßen Kopfstütze gemachten Ausführungen gelten für das erfindungsgemäße Verfahren gleichermaßen und umgekehrt.

Vorzugsweise wird der Läufer bei der Bewegung des Gehäuses nach vorne zeitweise so gedreht, dass er außer Eingriff mit dem Sperrmittel gelangt. Sobald diese Vorwärtsbewegung abgebrochen und/oder umgekehrt wird, gelangen die Form- und/oder Kraftschlussmittel des Läufers und des Sperrmittels sofort wieder in Eingriff.

Weiterhin bevorzugt rastet der Läufer beim Erreichen seiner vordersten Stellung in eine verriegelnde Stellung relativ zu dem Gehäuse ein. Der Läufer kann dann nach hinten bzw. hin und her verschoben werden, ohne dass er das Sperrmittel berührt. Sobald der Läufer seine hinterste Stellung erreicht hat, wird die Verrastung wieder aufgehoben und die Form- und/oder Kraftschlussmittel des Läufers gelangen wieder in Eingriff mit den Form- und/oder Kraftschlussmitteln des Sperrmittels.

Gemäß einer alternativen Ausführungsform rastet der Läufer bei einer Bewegung nach vorne in eine entriegelnde Stellung ein. Dadurch ist eine Bewegung der Kopfstütze nach vorne möglich, ohne dass der Läufer in Eingriff mit dem Sperrmittel steht. Dadurch wird eine Geräuschbelästigung während des Vorziehens des Läufers vermieden. Sobald eine rückwärts gerichtete Kraft auf das Gehäuse aufgebracht wird, wird diese Verrastung aufgehoben und die Form- und/oder Kraftschlussmittel des Läufers gelangen wieder in Eingriff mit dem Sperrmittel, so dass eine Bewegung des Gehäuses der Kopfstütze nach hinten blockiert wird. Bei dieser Ausführungsform ist eine rückwärtsgerichtete Bewegung des Gehäuses der Kopfstütze nur dann möglich, wenn der Läufer, beispielsweise durch Betätigung einer Handhabe, mit dem Sperrmittel außer Eingriff gebracht wird.

Im Folgenden werden die Erfindungen anhand der Figuren 1 bis 16 erläutert.

Diese Erläuterungen sind lediglich beispielhaft und schränken den allgemeinen Erfindungsgedanken nicht ein. Diese Erläuterungen gelten für alle Gegenstände der vorliegenden Erfindung gleichermaßen.
Figur 1 zeigt die erfindungsgemäße Kopfstütze mit dem verriegelten Läufer.
Figur 2 zeigt die Kopfstütze gemäß Figur 1 mit entriegeltem Läufer.
Figur 3 zeigt Details des Läufers gemäß den Figuren 1 und 2.
Figur 4 zeigt Details des Lagers und des Sperrmittels gemäß den Figuren 1 und 2.
Figur 5 zeigt den Läufer und das Sperrmittel gemäß den voranstehenden Figuren.
Figur 6 zeigt die Steuerkurve in dem Läufer gemäß den voranstehenden Figuren.
Figur 7 zeigt weitere Details des Läufers gemäß den voranstehenden Figuren.
Figur 8 zeigt weitere Details des Läufers.
Figuren 9 und 10 zeigen den Läufer im Zusammenspiel mit dem Sperrmittel.
Figuren 11 und 12 zeigen eine weitere Ausführungsform der Steuerkurve in dem Läufer.
Figuren 13 bis 16 zeigen Details der Ausführungsform des Läufers gemäß den Figuren 11 und 12.

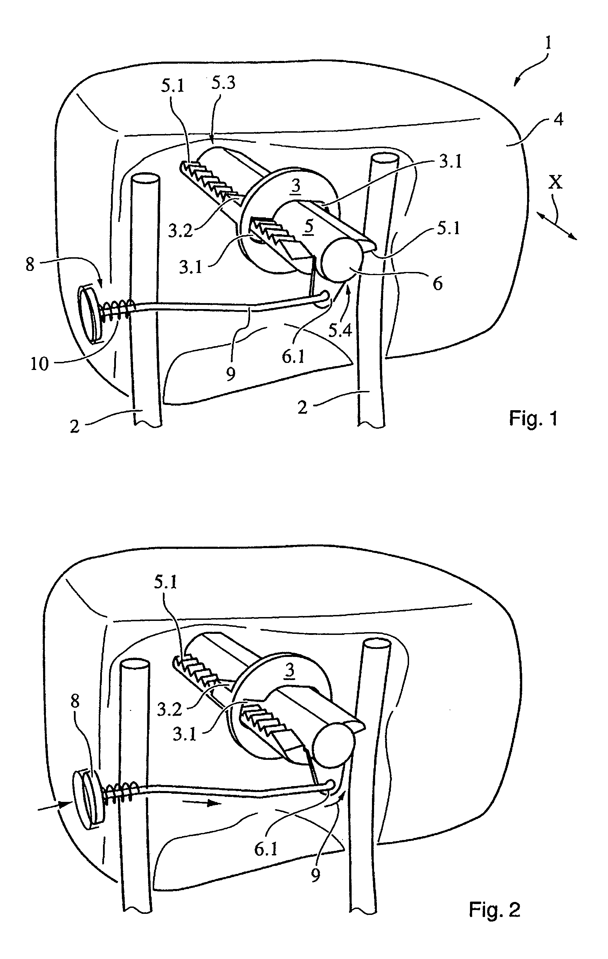

Figur 1 zeigt die erfindungsgemäße Kopfstütze 1, die mittels zweier Haltestangen 2 an der Rückenlehne (nicht dargestellt) eines Fahrzeugsitzes angeordnet ist. Diese Kopfstütze weist ein Gehäuse 4 auf, das vorzugsweise mit einer Polsterung und/oder einem Bezug versehen ist. Erfindungsgemäß ist nun vorgesehen, dass das Gehäuse 4 der Kopfstütze relativ zu den Haltestangen 2 in X-Richtung zum Kopf des Sitzinsassen hin- und davonweg bewegbar ist. Dafür ist an dem Gehäuse 4 mittels eines Lagers 6 ein Läufer 5 vorgesehen, der relativ zu einem Sperrmittel 3, das vorzugsweise fest mit den Haltestangen 2 verbunden ist, verschieblich vorgesehen ist. Um zu verhindern, dass sich das Gehäuse der Kopfstütze selbsttätig, insbesondere vom Kopf des Sitzinsassen weg, d. h. in die Papierebene hinein, bewegt, weist der Läufer 5 Form- und/oder Kraftschlussmittel 5.1 auf, die in dem vorliegenden Fall als Zähne ausgeführt sind und die sich parallel zu der Längsmittelachse des Läufers erstrecken. In dem vorliegenden Fall sind sowohl auf der ersten Seite 5.3 als auch auf der zweiten Seite 5.4 des Läufers 5 Form- und/oder Kraftschlussmittel 5.1 vorgesehen. Bei dem Läufer 5 handelt es sich folglich um eine Zahnstange, die auf zwei Seiten Zahnreihen 5.1 aufweist. Der Läufer 5 ist mittels eines Lagers 6 drehbar sowie längsverschieblich zu dem Lager 6, d. h. auch zu dem Gehäuse 4 vorgesehen. Der Läufer 5 erstreckt sich durch eine Ausnehmung 3.1 des Sperrmittels 3, die zumindest partiell größer ausgeführt ist als der Querschnitt des Läufers 5. An dem Sperrmittel 3 sind zu den Form- und/oder Kraftschlussmitteln 5.1 komplementäre Form- und/oder Kraftschlussmittel 3.2 vorgesehen, die sich parallel zu den Form- und/oder Kraftschlussmitteln 5.1 erstrecken. Die Form- und oder Kraftschlussmittel 5.1, 3.2 können wahlweise miteinander in Eingriff gebracht werden und verhindern dadurch, dass sich der Läufer selbsttätig relativ zu dem Sperrmittel zumindest in einer Richtung bewegt. Die Form- und/oder Kraftschlussmittel 5.1 und 5.3 sind in dem vorliegenden Fall jeweils als Zähne mit einer schrägen Flanke vorgesehen und so zueinander angeordnet, dass der Läufer in eine Richtung, vorzugsweise nach vorne, zu dem Kopf des Sitzinsassen hin, bewegt werden kann ohne dass die Form- und/oder Kraftschlussmittel 5.1, 3.2 diese Bewegung verhindern. Lediglich wenn die steilen Flanken der Form- und/oder Kraftschlussmittel 5.1, 3.2 in Eingriff zueinander stehen, wird die Bewegung des Läufers relativ zu dem Sperrmittel verhindert. Dies ist insbesondere bei einer rückwärtsgerichteten, d. h. in die Papierebene hinein gerichteten Bewegung des Läufers der Fall. An dem Lager 6 ist ein Steuerstift 7 vorgesehen, der aus dem radialen Umfang des Lagers 6 heraussteht und in eine Steuerkurve 5.2, die in dem vorliegenden Fall als Steuerschlitz in dem Läufer 5 ausgebildet ist, hineinragt. Durch den Steuerstift 7 können wahlweise Drehmomente von dem Lager 6 auf den Läufer 5 übertragen werden. An dem Lager 6 ist ein Hebel 6.1 vorgesehen. An diesem Hebel ist ein Ende eines Gestänges 9 gelagert, das an seinem anderen Ende eine Handhabe 8, hier in Form eines Druckknopfes aufweist, mit der die Verriegelung zwischen dem Läufer 5 und dem Sperrmittel 3 gelöst werden kann. Zwischen der Handhabe 8 und dem Gehäuse 4 ist ein Federmittel 10 vorgesehen, das den Läufer 5 in seine verriegelnde Stellung vorspannt.

Die Entriegelung des Läufers 5 ist in Figur 2 dargestellt. Durch Drücken der Handhabe 8 wird, wie durch den Pfeil dargestellt, eine Drehbewegung des Lagers 6 erzeugt, was durch den Pfeil 9 dargestellt ist. Diese Drehbewegung wird auf den Läufer 5 übertragen, so dass die Form- und/oder Kraftschlussmittel 5.1 des Läufers 5 außer Eingriff gelangen mit den Form- und/oder Kraftschlussmitteln 3.2 des Sperrmittels 3. Der Läufer 5 kann in dieser Stellung sowohl zum Kopf des Sitzinsassen hin als auch vom Kopf des Sitzinsassen weg bewegt werden, ohne dass sich die Form- und/oder Kraftschlussmittel 5.1, 3.2 berühren. Sobald die Handhabe 8 wieder losgelassen wird, dreht sich der Läufer 5 zurück und die Form- und oder Kraftschlussmittel 5.1, 3.2 gelangen wieder in Eingriff miteinander.

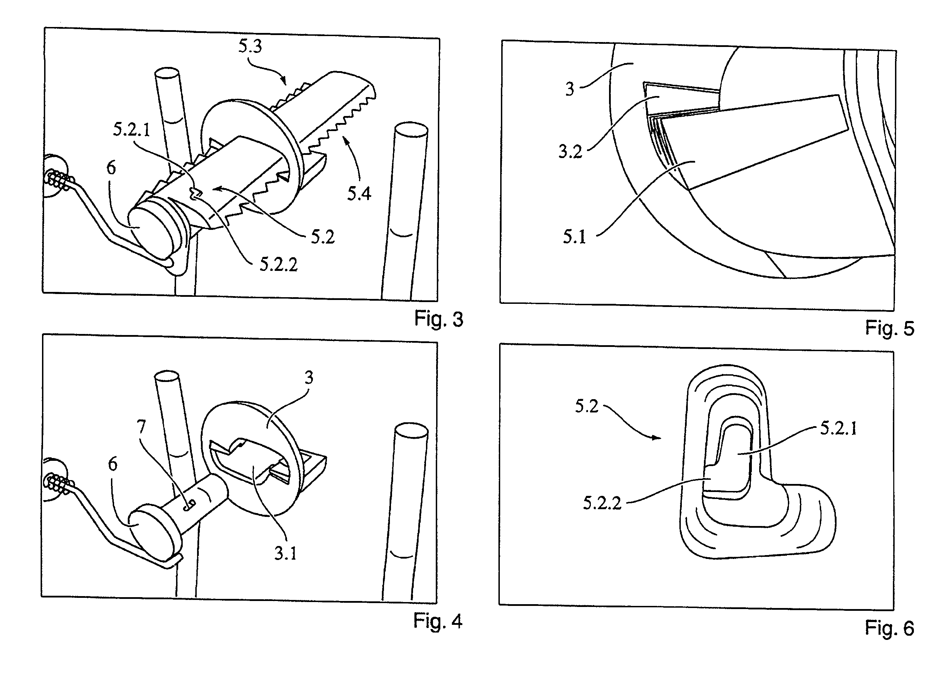

Wird nun die Kopfstütze nur nach vorne gezogen ohne dass die Handhabe 8 betätigt worden ist, gleiten die schrägen Zahnrücken der Form- und/oder Kraftschlussmittel 5.1, 3.2 jeweils aneinander entlang und verdrehen dadurch den Läufer entgegen des Uhrzeigersinns, was insbesondere in den Figuren 3 und 5 zu sehen ist. Kurz bevor die Zahnspitzen der Zähne 3.2 des Sperrmittels und die Zahnspitzen der Zähne 5.1 des Läufers 5 in derselben axialen Position sind, rutscht der Steuerstift 7 aus einer Quernut 5.2.1 (vergleiche Figuren 3 und 6) des Steuerschlitzes 5.2 in den steilen, im Wesentlichen parallel zu der Längsachse des Läufers angeordneten Abschnitt der Steuerkurve 5.2 und dreht hierbei die Zähne 5.1 vollständig aus der Verzahnung 3.2 des Sperrmittels 3 heraus. Die Steigung des Abschnitts 5.2.2 arbeitet dabei gegen die Kraft der Feder 10. Sobald der Steuerstift 7 die Sohle des Abschnitts 5.2.2 erreicht hat, nimmt er den Läufer 5 bis zum beliebigen Ende des Verfahrweges mit. Beim Verschieben des Steuerstifts 7 von der Quernut 5.2.1 bis zur Sohle des Abschnitts 5.2.2 hat sich das Lager 6 relativ zu dem Läufer 5 verschoben. Jede rückwärtige Verschiebung des Gehäuses 4 der Kopfstütze 1 und damit des Lagers 6 führt ohne dass die Handhabe betätigt wird zum sofortigen Sperren des Läufers relativ zu dem Sperrmittel 3, indem sich der Sperrstift 7 wieder von der Sohle des Abschnitts 5.2.2 in die Quernut 5.2.1 bewegt. Auch hierbei findet eine Relativbewegung zwischen dem Läufer 5 und dem Lager 6 statt.

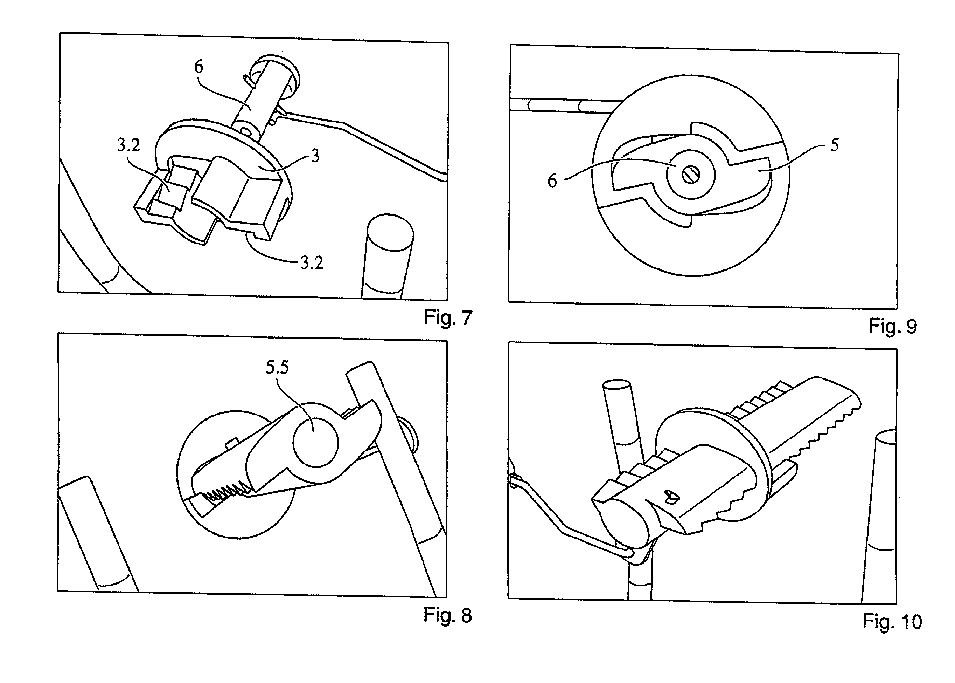

Die Figuren 7 bis 10 zeigen weitere Details der Kopfstütze gemäß den Figuren 1 bis 6. In Figur 7 ist deutlich zu erkennen, dass die Form- und/oder Kraftschlussmittel 3.2 des Sperrmittels 3 ebenfalls reihenförmig parallel zu der Längsachse des Läufers 5 angeordnet sind und diese Form- und/oder Kraftschlussmittel 3.2 einen schrägen Zahnrücken aufweisen. In Figur 8 ist eine Ausnehmung 5 in dem Läufer 5 zu sehen, in die das Lager 6 eingreift. Der Läufer 5 kann sich relativ zu dem Lager 6 drehen sowohl längsverschieben als auch drehen, wobei die Längsverschiebung und die Drehung durch das Zusammenspiel des Steuerstiftes 7 mit dem Steuerschlitz eingeschränkt ist.

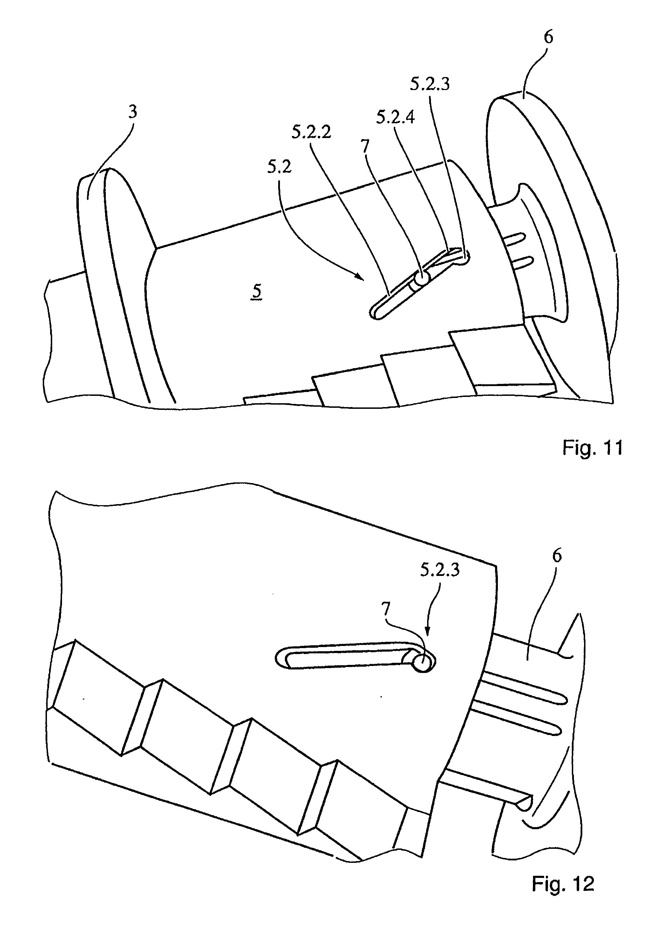

Figuren 11 bis 16 zeigen eine weitere Ausführungsform der erfindungsgemäßen Kopfstütze wobei im Wesentlichen auf die Ausführungen, die zu der Kopfstütze gemäß den Figuren 1 bis 10 gemacht worden sind, Bezug genommen werden kann. In dem vorliegenden Fall weist die Kopfstütze vorzugsweise keine manuelle Entriegelung auf und die Steuerkurve 5.2 weist, wie insbesondere den Figuren 11 und 12 entnommen werden kann, einen steilen, vorzugsweise Helix-förmig gestalteten Abschnitt 5.2.2 sowie einen Rastabschnitt 5.2.3 auf. Wird das Gehäuse 4 der Kopfstütze 1 ausgehend von einer beliebigen Ausgangsstellung nach hinten, d. h. vom Kopf des Sitzinsassen weg bewegt, was beispielsweise bei einem Heckaufprall passieren kann, dreht der Steuerstift 7, der ortsfest an dem Gehäuse vorgesehen ist, die Form- und/oder Kraftschlussmittel 5.1 des Läufers 5 in die Form- und/oder Kraftschlussmittel 3.2 des Sperrmittels 3 hinein und blockieren dadurch eine rückwärtige Bewegung des Gehäuses 4 der Kopfstütze 1. Soll die Position der Kopfstütze beispielsweise zu Komfortzwecken nach hinten angepasst werden, wird das Gehäuse 4 der Kopfstütze 1 zum Entsperren nach vorne, d. h. zum Kopf des Sitzinsassen hin bis zu seinem Endanschlag gezogen. Dabei gleiten die Form- und/oder Kraftschlussmittel 5.1, 3.2, die in dem vorliegenden Fall als Zähne mit einer schrägen und einer steilen Flanke ausgeführt sind, aneinander entlang. Während dieser Bewegung gleitet der Steuerstift 7 des Lagers 6 in der Steuerkurve nach vorne bis kurz vor den Wendepunkt 5.2.4. Diese Axialbewegung des Lagers 6 und damit des Steuerstiftes 7 führt zu einer Drehbewegung des Läufers 5, sodass sich die Form- und/oder Kraftschlussmittel 5.1 des Läufers 5 aus den Form- und/oder Kraftschlussmitteln 3.2 des Sperrmittels 3 herausdrehen und somit die Verzahnung vollständig trennen. Nachdem der Steuerstift 7 den Wendepunkt erreicht hat, bewegen sich das Gehäuse 6 und der Läufer 7 gemeinsam. Durch jedwede rückwärtige Verschiebung des Gehäuses 4 und damit des Lagers 6 wird der Läufer 5 durch das Zusammenwirken des Steuerstiftes 7 mit der Steuerkurve 5.2 wieder in seine verriegelnde Stellung gedreht. Wird die Vorwärtsbewegung jedoch bis zu einem vorderen Endanschlag weitergeführt, gelangt der Steuerstift über den Wendepunkt 5.2.4 hinaus in den Rastabschnitt 5.2.3, so dass der Läufer 5 in seinem entriegeltem Zustand fixiert wird. In diesem Zustand kann das Gehäuse 4 der Kopfstütze 1 nach hinten bis zu einem hinteren Anschlag bewegt werden. Sobald dieser hintere Anschlag erreicht ist, wird, bei einer weiteren rückwärtigen Bewegung des Gehäuses 4 und damit des Lagers 6, der Steuerstift 7 wieder aus dem Rastabschnitt 2.2.3 und über den Wendepunkt 5.2.4 hinaus bis zur Sohle des Abschnitts 5.2.2 gedrückt. Dabei dreht sich der Läufer 5, so dass die Form- und/oder Kraftschlussmittel 5.1 wieder mit den Form- und/oder Kraftschlussmitteln 3.2 des Sperrmittels in Eingriff gebracht werden. Das Gehäuse kann jetzt wieder nur noch nach vorne gezogen werden, indem die schrägen Flanken der Form- und/oder Kraftschlussmittel 5.1, 3.2 aneinander entlang gleiten. Eine rückwärtige Bewegung wird durch das Sperrmittel 3 blockiert.

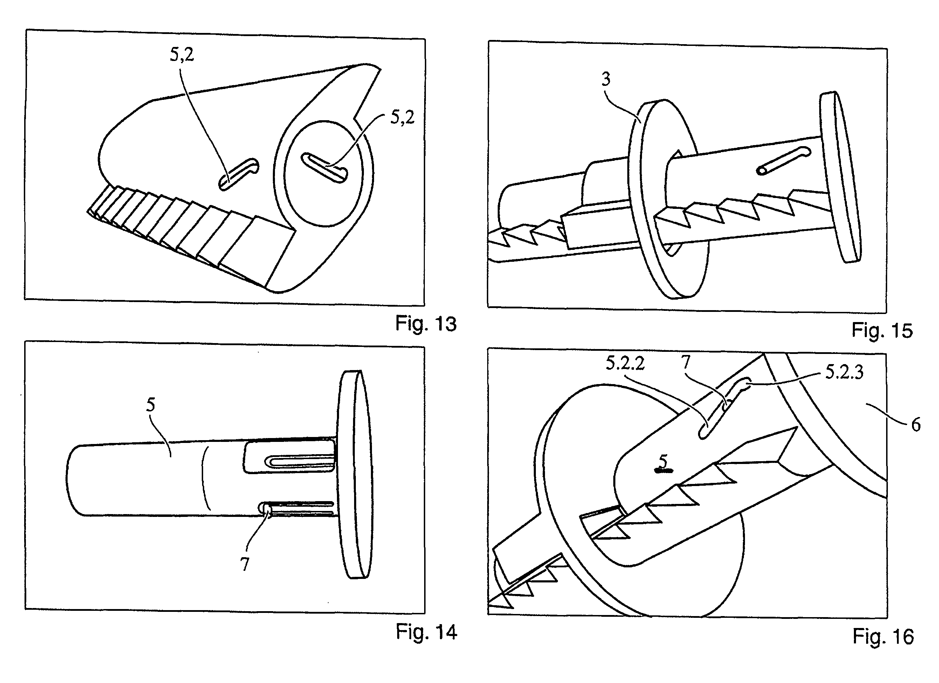

Figur 12 zeigt den Steuerstift 7 in dem Rastabschnitt 3.2.3. Aus den Figuren 13 und 14 ist zu erkennen, dass der Läufer 5 zwei gegenüberliegende Steuerkurven 5.2 aufweist, in die jeweils ein Steuerstift 7 eingreift. Figuren 15 und 16 zeigen noch einmal Details des Läufers bzw. des Sperrmittels 3. Im Übrigen wird auf die Ausführungen gemäß den Figuren 1 bis 10 Bezug genommen.

### Bezugszeichenliste:

- 1: Kopfstütze
- 2: Haltestange
- 3: Sperrmittel
- 3.1: Ausnehmung
- 3.2: Form- und/oder Kraftschlussmittel, Zähne
- 4: Gehäuse
- 5: Läufer, Zahnstange
- 5.1: Form- und/oder Kraftschlussmittel, Zähne
- 5.2: Steuerkurve, Steuerschlitz
- 5.2.1: Quernut
- 5.2.2: steiler Abschnitt der Steuerkurve, Helix-förmiger Abschnitt
- 5.2.3: Rastabschnitt
- 5.2.4: Wendepunkt
- 5.3: erste Seite
- 5.4: zweite Seite
- 5.5: Ausnehmung
- 6: Lager
- 6.1: Hebel
- 7: Steuerstift
- 8: Handhabe
- 9: Pfeil, Drehrichtung
- 10: Federmittel

## Patentansprüche

1. Kopfstütze (1) mit einem Gehäuse (4), das zumindest teilweise relativ zu einer Haltestange (2), mit der die Kopfstütze (1) an der Rückenlehne eines Fahrzeugsitzes angeordnet ist, zum Kopf des Sitzinsassen hin und davon weg bewegbar ist, wobei an dem Gehäuse (4) ein Läufer (5) mit Form- und/oder Kraftschlussmitteln (5.1) entlang dessen Längserstreckung vorgesehen ist, die jeweils mit Form- und/oder Kraftschlussmitteln (3.2) eines Sperrmittels (3) in Eingriff bringbar sind und das Gehäuse (4) in seiner jeweiligen Position fixieren, wobei an dem Gehäuse (4) ein Lager (6) für den Läufer (5) angeordnet ist, wobei der Läufer (5) relativ zu diesem Lager (6) drehbar und längsverschieblich vorgesehen ist, wobei die Form- und/oder Kraftschlussmittel (5.1) des Läufers (5) mit den Form- und/oder Kraftschlussmitteln (3.2) des Sperrmittels (3) bei der relativen Drehbewegung des Läufers (5) zum Lager (6) außer Eingriff bringbar sind, **dadurch gekennzeichnet, dass** der Läufer (5) eine Ausnehmung aufweist, welche dazu ausgebildet ist, das Lager (6) aufzunehmen, wobei das Lager (6) einen Steuerstift (7) aufweist, welcher aus dem radialen Umfang des Lagers (6) heraussteht und welcher dazu ausgebildet ist, in eine Steuerkurve (5.2) des Läufers (5) hineinzuragen, wobei die Steuerkurve (5.2) ein Steuerschlitz ist, welcher dazu ausgebildet ist, den Steuerstift (7) aufzunehmen, wobei die Steuerkurve (5.2) einen steilen, vorzugsweise Helix-förmig gestalteten Abschnitt (5.2.2) sowie einen Rastabschnitt (5.2.3) aufweist, wobei die Längsverschiebung und die Drehung des Läufers (5) relativ zu dem Lager (6) durch ein Zusammenwirken des Steuerstiftes (7) mit dem Steuerschlitz eingeschränkt ist.

2. Kopfstütze (1) nach Anspruch 1, **dadurch gekennzeichnet, dass** der Läufer (5) eine Zahnstange ist, die auf zwei gegenüberliegenden Seiten (5.3, 5.4) jeweils Zähne (5.1) aufweist.

3. Kopfstütze (1) nach einem der voranstehenden Ansprüche, **dadurch gekennzeichnet, dass** zwischen dem Läufer (5) und dem Lager (6) ein Federmittel (10) vorgesehen ist.

4. Kopfstütze (1) nach einem der voranstehenden Ansprüche, **dadurch gekennzeichnet, dass** der Läufer (5) mit Axialspiel an dem Gehäuse (4) gelagert ist.

5. Verfahren zur Verstellung einer Kopfstütze (1) mit einem Gehäuse (4), das zumindest teilweise relativ zu einer Haltestange (2), mit der die Kopfstütze an der Rückenlehne eines Fahrzeugsitzes angeordnet ist, zum Kopf des Sitzinsassen hin und davon weg bewegbar ist, wobei an dem Gehäuse ein Läufer (5) mit Form- und/oder Kraftschlussmitteln (5.1) entlang dessen Längserstreckung vorgesehen ist, die jeweils mit Form- und/oder Kraftschlussmitteln (3.2) eines Sperrmittels (3) in Eingriff bringbar sind, sodass das Gehäuse in seiner jeweiligen Position fixiert wird, wobei das Gehäuse (4) der Kopfstütze (1) zum Entsperren nach vorne, d. h. zum Kopf des Sitzinsassen hin, bis zu einem Endanschlag gezogen wird, **dadurch gekennzeichnet, dass** die Form- und/oder Kraftschlussmittel (5.1) des Läufers (5) und die Form- und/oder Kraftschlussmitteln (3.2) des Sperrmittels (3) aneinander entlang gleiten, wobei während dieser Bewegung ein aus dem radialen Umfang eines in einer Ausnehmung des Läufers (5) befindlichen Lagers (6) herausstehender Steuerstift (7) in einer einen steilen, vorzugsweise Helix-förmig gestalteten Abschnitt (5.2.2) sowie einen Rastabschnitt (5.2.3) aufweisenden Steuerkurve des Läufers (5) nach vorne bis kurz vor ihren Wendepunkt (5.2.4) gleitet, wobei eine Axialbewegung des Lagers (6) und damit des Steuerstiftes (7) zu einer Drehbewegung des Läufers (5) führt, sodass sich die Form- und/oder Kraftschlussmittel (5.1) des Läufers (5) aus den Form- und/oder Kraftschlussmitteln (3.2) des Sperrmittels (3) herausdrehen und somit außer Eingriff gebracht werden, wobei sich das Gehäuse (6) und der Läufer (7), nachdem der Steuerstift (7) den Wendepunkt (5.2.4) erreicht hat, gemeinsam bewegen, wobei durch eine rückwärtige Verschiebung des Gehäuses (4) und damit des Lagers (6) der Läufer (5) durch das Zusammenwirken des Steuerstiftes (7) mit der Steuerkurve (5.2) wieder in seine verriegelnde Stellung gedreht wird,
wobei im Falle, dass die Vorwärtsbewegung bis zu einem vorderen Endanschlag weitergeführt wird, der Steuerstift (7) über den Wendepunkt (5.2.4) hinaus in einen Rastabschnitt (5.2.3) gelangt, so dass der Läufer (5) in einem entriegeltem Zustand fixiert wird, wobei in diesem Zustand das Gehäuse (4) der Kopfstütze (1) nach hinten bis zu einem hinteren Anschlag bewegt werden kann,
wobei im Falle, dass der hintere Anschlag erreicht ist, bei einer weiteren rückwärtigen Bewegung des Gehäuses (4) und damit des Lagers (6) der Steuerstift (7) wieder aus dem Rastabschnitt (2.2.3) und über den Wendepunkt (5.2.4) hinaus bis zur Sohle des Abschnitts 5.2.2 gedrückt wird, wobei sich der Läufer (5) dreht, so dass die Form- und/oder Kraftschlussmittel (5.1) wieder mit den Form- und/oder Kraftschlussmitteln (3.2) des Sperrmittels (3) in Eingriff gebracht werden.

6. Verfahren nach Anspruch 5, **dadurch gekennzeichnet, dass** der Läufer bei der Bewegung nach vorne gedreht wird.

7. Verfahren nach Anspruch 5 oder 6, **dadurch gekennzeichnet, dass** der Läufer (5) beim Erreichen seiner vordersten Stellung in eine entriegelnde Stellung einrastet.

8. Verfahren nach Anspruch 5 oder 6, **dadurch gekennzeichnet, dass** der Läufer bei der Bewegung nach vorne in eine entriegelnde Stellung einrastet.

## Claims

1. Head restraint (1) having a housing (4) which can be moved at least partially relative to a retention rod (2), by means of which the head restraint (1) is arranged on the backrest of a vehicle seat, towards and away from the head of the seat occupant, wherein there is provided on the housing (4) a rotor (5) having, along the longitudinal extent thereof, positive-locking and/or non-positive-locking means (5.1) which can each be brought into engagement with positive-locking and/or non-positive-locking means (3.2) of a locking means (3) and fix the housing (4) in the respective position thereof, wherein there is arranged on the housing (4) a bearing (6) for the rotor (5), wherein the rotor (5) is provided so as to be able to be rotated and longitudinally displaced relative to this bearing (6), wherein the positive-locking and/or non-positive-locking means (5.1) of the rotor (5) can be disengaged from the positive-locking and/or non-positive-locking means (3.2) of the locking means (3) during the relative rotational movement of the rotor (5) with respect to the bearing (6), **characterized in that** the rotor (5) has a recess which is designed to receive the bearing (6), wherein the bearing (6) has a control pin (7) which protrudes from the radial circumference of the bearing (6) and which is designed to project into a control cam (5.2) of the rotor (5), wherein the control cam (5.2) is a control slot which is designed to receive the control pin (7), wherein the control cam (5.2) has a steep, preferably helically formed portion (5.2.2) and a latching portion (5.2.3), wherein the longitudinal displacement and the rotation of the rotor (5) relative to the bearing (6) are restricted by cooperation of the control pin (7) with the control slot.

2. Head restraint (1) according to Claim 1, **characterized in that** the rotor (5) is a toothed rod which has teeth (5.1) at two opposing sides (5.3, 5.4), respectively.

3. Head restraint (1) according to either of the preceding claims, **characterized in that** a resilient means (10) is provided between the rotor (5) and the bearing (6).

4. Head restraint (1) according to one of the preceding claims, **characterized in that** the rotor (5) is supported on the housing (4) with axial play.

5. Method for adjusting a head restraint (1) having a housing (4) which can be moved at least partially relative to a retention rod (2), by means of which the head restraint is arranged on the backrest of a vehicle seat, towards and away from the head of the seat occupant, wherein there is provided on the housing a rotor (5) having, along the longitudinal extent thereof, positive-locking and/or non-positive-locking means (5.1) which can each be brought into engagement with positive-locking and/or non-positive-locking means (3.2) of a locking means (3), and therefore the housing is fixed in the respective position thereof, wherein the housing (4) of the head restraint (1) is pulled forwards, i.e. towards the head of the seat occupant, as far as an end stop for unlocking purposes, **characterized in that** the positive-locking and/or non-positive-locking means (5.1) of the rotor (5) and the positive-locking and/or non-positive-locking means (3.2) of the locking means (3) slide along one another, wherein, during this movement, a control pin (7) protruding from the radial circumference of a bearing (6) located in a recess of the rotor (5) slides forwards in a control cam of the rotor (5), the control cam having a steep, preferably helically formed portion (5.2.2) and a latching portion (5.2.3), until shortly before the turning point (5.2.4) of said control cam, wherein an axial movement of the bearing (6) and therefore of the control pin (7) leads to a rotational movement of the rotor (5) such that the positive-locking and/or non-positive-locking means (5.1) of the rotor (5) rotate away from the positive-locking and/or non-positive-locking means (3.2) of the locking means (3) and are therefore disengaged therefrom, wherein, after the control pin (7) has reached the turning point (5.2.4), the housing (6) and the rotor (7) jointly move, wherein, by means of a backward displacement of the housing (4) and therefore of the bearing (6), the rotor (5) is rotated into the locking position thereof again by cooperation of the control pin (7) with the control cam (5.2), wherein, in the event that the forwards movement is continued as far as a front end stop, the control pin (7) passes beyond the turning point (5.2.4) into a latching portion (5.2.3), and therefore the rotor (5) is fixed in an unlocked state, wherein, in said state, the housing (4) of the head restraint (1) can be moved rearwards as far as a rear stop, wherein, in the event that the rear stop is reached, during a further backward movement of the housing (4) and therefore of the bearing (6), the control pin (7) is pressed again out of the latching portion (2.2.3) and beyond the turning point (5.2.4) as far as the base of the portion (5.2.2), wherein the rotor (5) rotates, and therefore the positive-locking and/or non-positive-locking means (5.1) are brought into engagement again with the positive-locking and/or non-positive-locking means (3.2) of the locking means (3).

6. Method according to Claim 5, **characterized in that** the rotor is rotated forwards during the movement.

7. Method according to Claim 5 or 6, **characterized in that** the rotor (5) engages in an unlocking position when it has reached its foremost position.

8. Method according to Claim 5 or 6, **characterized in that** the rotor engages in an unlocking position during the forwards movement.

## Revendications

1. Appuie-tête (1) présentant un boîtier (4) apte à être approché et éloigné de la tête de l'occupant d'un siège de véhicule au moins en partie par rapport à une tringle de maintien (2) par laquelle l'appuie-tête (1) est placé sur le dossier du siège,
une glissière (5) présentant des moyens (5.1) de mise en correspondance géométrique et/ou de mise en correspondance mécanique le long de son extension longitudinale étant prévue sur le boîtier (4), ces moyens pouvant être engagés par des moyens (3.2) de mise en correspondance géométrique et/ou de mise en correspondance mécanique d'un moyen de blocage (3) et fixant le boîtier (4) dans sa position,
un support (6) pour la glissière (5) étant disposé sur le boîtier (4), la glissière (5) étant prévue de manière à pouvoir se déplacer en rotation et en coulissement longitudinal par rapport à ce support (6),
les moyens (5.1) de mise en correspondance géométrique et/ou de mise en correspondance mécanique de la glissière (5) pouvant être désengagés des moyens (3.2) de mise en correspondance géométrique et/ou de mise en correspondance mécanique du moyen de blocage (3) lors du déplacement de rotation relative de la glissière (5) par rapport au support (6),
**caractérisé en ce que**
la glissière (5) présente une découpe configurée pour reprendre le support (6), le support (6) présentant une tige de commande (7) qui déborde au-delà de la périphérie radiale du support (6) et étant configuré pour pénétrer dans une courbe de commande (5.2) de la glissière (5),
**en ce que** la courbe de commande (5.2) est une fente de commande configurée pour reprendre la tige de commande (7),
**en ce que** la courbe de commande (5.2) présente une partie raide (5.2.2) configurée de préférence en forme d'hélice ainsi qu'une partie d'encliquetage (5.2.3) et
**en ce que** le déplacement longitudinal et la rotation de la glissière (5) par rapport au support (6) sont limités par la coopération entre la tige de commande (7) et la fente de commande.

2. Appuie-tête (1) selon la revendication 1, **caractérisé en ce que** la glissière (5) est une crémaillère qui présente des dents (5.1) sur chacun de deux côtés opposés (5.3, 5.4).

3. Appuie-tête (1) selon l'une des revendications précédentes, **caractérisé en ce qu'**un moyen élastique (10) est prévu entre la glissière (5) et le support (6).

4. Appuie-tête (1) selon l'une des revendications précédentes, **caractérisé en ce que** la glissière (5) est montée sur le boîtier (4) avec un jeu axial.

5. Procédé d'ajustement d'un appuie-tête (1) présentant un boîtier (4) apte à être approché et éloigné de la tête de l'occupant d'un siège de véhicule au moins en partie par rapport à une tringle de maintien (2) par laquelle l'appuie-tête est placé sur le dossier du siège,
une glissière (5) présentant des moyens (5.1) de mise en correspondance géométrique et/ou de mise en correspondance mécanique le long de son extension longitudinale étant prévue sur le boîtier, ces moyens pouvant être engagés par des moyens (3.2) de mise en correspondance géométrique et/ou de mise en correspondance mécanique d'un moyen de blocage (3) de telle sorte que le boîtier soit immobilisé dans sa position,
le boîtier (4) de l'appuie-tête (1) étant tiré jusqu'à une butée d'extrémité pour être débloqué vers l'avant, c'est-à-dire vers la tête de l'occupant du siège,
**caractérisé en ce que**
les moyens (5.1) de mise en correspondance géométrique et/ou de mise en correspondance mécanique de la glissière (5) et les moyens (3.2) de mise en correspondance géométrique et/ou de mise en correspondance mécanique du moyen de blocage (3) coulissent l'un sur l'autre, et pendant ce déplacement, une tige de commande (7) qui déborde au-delà de la périphérie radiale d'un support (6) placé dans une découpe de la glissière (5) glisse vers l'avant jusqu'à peu avant son point d'inversion (5.2.4) dans une courbe de commande de la glissière (5), qui présente une partie (5.2.2) raide de préférence configurée en hélice ainsi qu'une partie d'encliquetage (5.2.3),
**en ce qu'**un déplacement axial du support (6) et donc de la tige de commande (7) entraîne un déplacement de rotation de la glissière (5) de telle sorte que les moyens (5.1) de mise en correspondance géométrique et/ou de mise en correspondance mécanique de la glissière (5) tournent pour sortir hors des moyens (3.2) de mise en correspondance géométrique et/ou de mise en correspondance mécanique du moyen de blocage (3) et sont ainsi désengagés,
**en ce que** le boîtier (6) et la glissière (7) se déplacent ensemble après la tige de commande (7) a atteint le point d'inversion (5.2.4),
**en ce qu'**un déplacement vers l'arrière du boîtier (4) et donc du support (6) entraîne une rotation de la glissière (5) dans sa position de verrouillage par la coopération entre la tige de commande (7) et la courbe de commande (5.2), et au cas où le déplacement vers l'avant est poursuivi jusqu'à une butée d'extrémité avant, la tige de commande (7) aboutit dans une partie d'encliquetage (5.2.3) au-delà du point d'inversion (5.2.4), de telle sorte que la glissière (5) est fixée dans un état déverrouillé, et dans cet état, le boîtier (4) de l'appuie-tête (1) peut être déplacé vers l'arrière jusqu'à une butée arrière, tandis qu'au cas où la butée arrière est atteinte, la tige de commande (7) est de nouveau repoussée hors de la partie d'encliquetage (2.2.3) et au-delà du point d'inversion (5.2.4) par la poursuite du déplacement vers l'arrière du boîtier (4) et donc du support (6) jusqu'à la semelle de la partie 5.2.2, de sorte que la glissière (5) tourne et que les moyens (5.1) de mise en correspondance géométrique et/ou de mise en correspondance mécanique engagent de nouveau les moyens (3.2) de mise en correspondance géométrique et/ou de mise en correspondance mécanique du moyen de blocage (3).

6. Procédé selon la revendication 5, **caractérisé en ce que** la glissière est mise en rotation lorsqu'elle est déplacée vers l'avant.

7. Procédé selon les revendications 5 ou 6, **caractérisé en ce que** la glissière (5) s'encliquette dans une position de déverrouillage lorsqu'elle atteint sa position extrême avant.

8. Procédé selon les revendications 5 ou 6, **caractérisé en ce que** la glissière s'encliquette dans une position de déverrouillage lorsqu'elle est déplacée vers l'avant.
